Europäisches Patentamt

European Patent Office

Office européen des brevets

(19)

(11) Veröffentlichungsnummer: **0 237 845 B1**

# EUROPÄISCHE PATENTSCHRIFT

(45) Veröffentlichungstag der Patentschrift: **28.10.92**

(51) Int. Cl.⁵: **B60J 1/20**, B60J 3/02

(21) Anmeldenummer: **87102720.7**

(22) Anmeldetag: **26.02.87**

(54) **Blendschutzeinrichtung für ein Fahrzeug.**

(30) Priorität: **18.03.86 DE 3608927**

(43) Veröffentlichungstag der Anmeldung:
**23.09.87 Patentblatt 87/39**

(45) Bekanntmachung des Hinweises auf die
Patenterteilung:
**28.10.92 Patentblatt 92/44**

(84) Benannte Vertragsstaaten:
**AT BE CH DE ES FR GB GR IT LI LU NL SE**

(56) Entgegenhaltungen:
DE-A- 3 415 930
DE-U- 8 405 657
US-A- 1 587 126
US-A- 1 810 422

(73) Patentinhaber: **Ieper Industries N.V.
Industrielaan 6 B
B-8900 Ieper(BE)**

(72) Erfinder: **Labeur, Lucas
Heidebergstraat 314
B-3200 Kessel-Lo (Leuven)(BE)**

(74) Vertreter: **Weber, Dieter, Dr. et al
Dr. Dieter Weber, Dipl.-Phys. Klaus Seiffert,
Dr. Winfried Lieke, Patentanwälte, Gustav-
Freytag-Strasse 25
W-6200 Wiesbaden 1(DE)**

EP 0 237 845 B1

## Beschreibung

Die Erfindung betrifft eine Blendschutzeinrichtung in Fensternähe eines Fahrzeuges, mit einer um eine Wickelwelle aufgewickelten, in einem länglichen Gehäuse befindlichen Lichtschutzbahn, die sich vorzugsweise über die Breite des Fensters erstreckt und an ihrem freien Ende mit einer seitlich geführten Zugstange versehen ist, wobei an den Enden der Zugstange in Richtung der Stangenachse bewegbare Haltestäbe mit jeweils einem Verbindungshals und an dessen Ende ein Führungskopf angeordnet sind, die seitliche Führung der Zugstange jeweils mittels einer im Querschnitt C-förmigen Schiene mit Längsschlitz erfolgt, und wobei die Schiene neben dem Gehäuse angeordnet und im Inneren mit einem länglichen, biegefähigen Schraubenflächenelement versehen ist, welches sich mit dem Führungskopf in Eingriff befindet, der in der Schiene gleitet und dessen Verbindungshals durch den Längsschlitz der Schiene ragt. Eine derartige Blendschutzeinrichtung ist aus der DE-U-84 05 657.6 bekannt. Der dort vorgesehene Antrieb der Führungsköpfe der Zugstange über biegbare Schneckenwellen ist relativ aufwendig und teuer und hat hohe Reibungsverluste beim Antrieb. Zur Vermeidung des Festklemmens der Führungsköpfe zwischen Schneckenwelle und Führungsrohr müssen die Schneckenwellen relativ flach verlaufen, was eine große Anzahl von Umdrehungen erfordert, bevor die Lichtschutzbahn sich über die Breite des Fensters hinwegbewegt hat.

Derüberhinaus sind weitere Blendschutzeinrichtungen bekannt, z.B. für die Heckscheibe von Personenkraftwagen. Über die Breite der Heckscheibe erstreckt sich eine Lichtschutzbahn in Form eines Maschengewebes aus Kunststofffasern, Textilien oder dergleichen und kann je nach Ausführungsform von Hand mehr oder weniger abgewickelt und in dieser Position eingestellt werden.

Insbesondere in Ländern mit starker Sonneneinstrahlung besteht ein großes Bedürfnis nach Verwendung ähnlicher Blendschutzeinrichtungen, vorzugsweise mit Elektroantrieb und bei unterschiedlichen Fahrzeugen. Es hat sich aber gezeigt, daß die Maße und Gestaltungen der Räume oder Fahrerkabinen in den Fahrzeugen von Modell zu Modell sehr unterschiedlich sind, so daß nicht eine für einen Fahrzeugtyp entworfene Blendschutzeinrichtung ohne weiteres auch für ein anderes Fahrzeug verwendet werden kann. Hier hat man mit Sonderausstattungen Abhilfe versucht, im großen und ganzen mußte aber für jeden Fahrzeugtyp eine andere Blendschutzeinrichtung geschaffen werden. Dies ist wirtschaftlich insbesondere dann nachteilig, wenn ein Fahrzeughersteller ein neues Modell entwickelt und seine auf Lager liegenden Blendschutzeinrichtungen nicht auch im neuen Fahrzeugtyp einbauen kann. Bisher stehen dem meist sogar innerhalb einer Fabrikmarke durch modernisierte Karosserien Maßänderungen im Wege, so daß die alten Blendschutzeinrichtungen nicht wieder verwendet werden können. Allein eine Verbreiterung eines Fensters um einige Millimeter oder gar um einige Zentimeter oder die Veränderung der Winkel parallel zur Lichtschutzbahn oder senkrecht zu dieser können Gestaltungsänderungen darstellen, die eine Übernahme einer älteren Blendschutzeinrichtung in einem Neufahrzeug unmöglich machen.

Gegenüber dem vorgenannten Stand der Technik liegt der Erfindung daher die Aufgabe zugrunde, die Blendschutzeinrichtung der eingangs genannten Art dahingehend zu verbessern, daß ihr Aufbau einfacher und preiswerter ist und daß auch bei verhältnismäßig geringer Leistung des Antriebsmotors ein schnelles Öffnen und Schließen der Blendschutzeinrichtung erfolgen kann, wobei eine leichte Anpassung an unterschiedliche räumliche Gegebenheiten erhalten bleiben soll.

Diese Aufgabe wird dadurch gelöst, daß die Schiene leicht verformbar ist, daß die Wickelwelle mit der Lichtschutzbahn von einem Motor angetrieben ist und daß das im Inneren der Führungsschiene befindliche Schraubflächenelement eine Feder ist, durch welche die Zugstange von der Wickelwelle fort vorgespannt gehalten ist.

Die Lichtschutzbahn wird einerseits von der im Gehäuse befindlichen Wickelwelle und andererseits von der Zugstange gehalten. Entfernt man die Zugstange von der Wickelwelle, wobei die Achsen beider dieser Teile parallel zueinander liegen, so vergrößert sich der Blendschutz und umgekehrt. Während die Wickelwelle in der Regel stationär angeordnet ist, sind auch bei bekannten Blendschutzeinrichtungen die Zugstangen seitlich geführt. Erfolgt nun diese Führung mit den erfindungsgemäß vorgeschlagenen Maßnahmen mittels einer Führungsschiene mit Längsschlitz, die plastisch verformbar ist, dann ergibt sich für den Fachmann sogleich die Erkenntnis, daß die neue Blendschutzeinrichtung auch an andere räumliche Gegebenheiten anpaßbar ist, weil die seitliche Führung, d.h. die C-förmige Führungsschiene, in vernünftigen Grenzen verformbar und an die neue Raumform der Fahrzeugkabine angepaßt werden kann. Verwendet man bei weiterem Befolgen der erfindungsgemäßen Lehre ein biegefähiges Schraubflächenelement, welches im Innern der Führungsschiene angeordnet und vorzugsweise drehbar ist, dann sind bereits Führungs- oder gegebenenfalls auch Antriebsmittel für die Zugstange vorgesehen, obgleich eine Anpassung an die Umgebung durch Verbiegen von Schiene und Schraubflächenelement möglich ist. Bei dem Schraubflächenelement handelt es sich um ein längliches drehbares Teil, dessen äußere Oberfläche eine wendelförmige Gestaltung hat. Mit dieser Oberfläche wird gemäß weiterer Lehre der Erfindung der Führungskopf des Haltestabes in Eingriff gebracht und hängt somit von der Bewegung des biegefähigen Schraubflächenelementes ab. Über dessen Bewegung an der Eingriffsstelle mit dem Führungskopf läßt sich also die Zugstange durch vorzugsweise elektrischen Antrieb in der gewünschten Weise steuern. Der Längsschlitz in der Führungsschiene erlaubt die Kopplung vom Führungskopf über den Verbindungshals zum Haltestab und damit auch zur Zugstange.

Die neue Blendschutzeinrichtung bietet also bei preiswerter Herstellbarkeit für verschiedene Fahrzeugtypen und Anwendungsmöglichkeiten einen Hebemechanismus für die Lichtschutzbahn, der bei elektrischem Antrieb auch ferngesteuert sein kann. Durch die beweglichen Haltestäbe in der Zugstange wird die Möglichkeit für eine teleskopartige Veränderung der Länge der Zugstange vorgesehen, so daß die neue Blendschutzeinrichtung auch an unterschiedliche Fensterbreiten ohne weiteres anpaßbar ist. Hat sich die Dachschräge verändert oder die Höhe des Fensters verkürzt, so kann durch Biegen der C-förmigen Führungsschiene ebenfalls eine leichte Anpassung bei ungehinderter Funktionsfähigkeit erfolgen.

Die Blendschutzeinrichtung gemäß der Erfindung kann in den unterschiedlichsten Fahrzeugen verwendet werden, beispielsweise in Personenkraftwagen, Lastwagen, Bussen oder auch Eisenbahnwagen. Der Antriebsmechanismus eignet sich sowohl für Seiten- als auch Rück- und Frontscheiben. Durch die Biegefähigkeit der Führungsschiene und des Schraubflächenelementes können sogar Hindernisse im Weg des Hebemechanismus umgangen werden, ohne daß andere Bauteile als die bei der erfindungsgemäßen Blendschutzeinrichtung ohnehin vorgesehenen Teile verwendet werden müßten.

Zweckmäßig ist es ferner, wenn das andere Ende der Führungsschiene, welches also als gehäusefern angesehen werden kann, mittels Befestigungseinrichtungen am Fahrzeugkörper angebracht ist. Auch hierdurch erkennt man die einfache Montagemöglichkeit, denn das gehäuseferne Ende der Führungsschiene kann in an sich bekannter Weise mittels Schrauben oder dergleichen am Fahrzeugkörper befestigt werden, wobei hier die geeignete Stelle deshalb besonders gut ausgewählt und verwendet werden kann, weil ja Lage und Form der Führungsschiene in gewissen Grenzen bezüglich Wickelwelle und Zugstange veränderbar sind. Diese Grenzen werden beispielsweise vorgegeben durch die Länge der bewegbaren Haltestäbe, die stets mit der Zugstange in Eingriff bleiben müssen.

Die Erfindung ist unter anderem dadurch gekennzeichnet, daß die Wickelwelle mit der Lichtschutzbahn von einem Motor angetrieben ist und daß das im Inneren der Führungsschiene befindliche Schraubflächenelement eine Feder ist, durch welche die Zugstange von der Wickelwelle fort vorgespannt gehalten ist. Im Gegensatz zu Ausführungsformen, bei welchen die Zugstange selbst gesteuert und bewegt wird, während die Wickelwelle unter der Wirkung einer Aufwickelfeder steht, wird hier die Zugstange unter die Wirkung einer Feder gestellt, welche deren Position vorspannt und zwar von der Wickelwelle fort. Die Bewegung wird über die Wickelwelle selbst eingeleitet. Wird sie in Aufwickelrichtung angetrieben, dann wird die Lichtschutzbahn eingezogen und umgekehrt. Mit Vorteil braucht keinerlei Verbindung mehr zwischen dem Gehäuse der Wickelwelle einerseits und der Führungsschiens andererseits vorgesehen sein. Beispielsweise kann der Antriebsmotor in der Nähe oder gar in dem Gehäuse der Wickelwelle vorgesehen sein und über einen ausgesuchten Getriebzug die Wickelwelle antreiben. Nur die Zugstange steht über ihre Haltestäbe mit deren Führungsköpfen mit der Führungsschiene bzw. der darin befindlichen Feder in Verbindung. Man erkennt die äußerst freizügige Montagemöglichkeit bei gleichbleibenden Teilen der erfindungsgemäßen Einrichtung, bei der das eine Ende der Feder mit dem Führungskopf in Eingriff ist.

Vorteilhaft ist die vorgenannte Ausführungsform dadurch weiter ausgestaltet, daß nach einer Weiterbildung der Erfindung die Feder eine Zugfeder ist, deren eines Ende an dem vom Gehäuse entfernten Ende der Führungsschiene befestigt ist, während das gehäusenahe Federende am Führungskopf des Haltestabes angebracht ist. Die Zugfeder läßt sich bei dieser Ausführungsform extrem umlenken, bei einem Sonderfall auch um 180°, wenn dies nötig ist. Die Führungsschiene müßte dann entsprechend U-förmig ausgestaltet sein und an der Biegestelle einen Dorn oder eine andere Umlenkstelle aufweisen, über welche die Feder hinübergelegt wird und sich auch durch Gleiten bewegen kann. Bei dieser Ausführungsform wird die Zugfeder den Führungskopf nach oben von der Wickelwelle fort in die gehäuseferne Richtung ziehen.

Eine andere Ausgestaltung der vorstehend erwähnten Ausführungsform ist dadurch gekennzeichnet, daß nach einer Weiterbildung der Erfindung die Feder eine Druckfeder ist, deren gehäusefernes Ende gegen den Führungskopf anliegt und deren gehäusenahes Ende in einer drehbar am Gehäuse der Wickelwelle angebrachten Halterung gehalten ist. Das gehäuseferne Ende ist bei der Ausführungsform der Blendschutzeinrichtung auf der Hutablage eines Personenwagens das obere Ende, und dieses liegt gegen den Führungskopf an, um die Zugstange unter Federspannung stets von der Wickelwelle fort zu halten. Auch bei dieser Ausführungsform sorgt die angetriebene Wickelwelle für ein Einziehen der Lichtschutzbahn, hier aber entgegen der Druckkraft der Feder. Das gehäusenahe Ende befindet sich in der beschriebenen Halterung, und wenn diese in der erfindungsgemäß gelehrten Weise am Gehäuse drehbar gehalten ist, ergibt sich wieder die günstige Winkelveränderung bei der Montage, und zwar für eine beliebige (natürlich nur in vernünftigen Grenzen) Winkelposition der Führungsschiene zum Gehäuse. Bei dieser Ausführungsform kann der Führungskopf beispielsweise Scheibenform haben, so daß er das im Querschnitt C-förmige Innere der Führungsschiene ausfüllt, auch während er entgegen der Kraft der Druckfeder in der Führungsschiene durch den Zug über die Lichtschutzbahn mehr oder weniger auf- und abbewegt wird.

Bei der eingangs beschriebenen Ausführungsform und auch bei anderen Beispielen der nach einer Weiterbildung der Erfindung Blendschutzeinrichtung kann aber erfindungsgemäß mit Vorteil der Führungskopf auch kugelförmig ausgebildet sein. Beispielsweise kann der Führungskopf in Gestalt der Kugel in die wendelförmig gewickelte, vom Elektromotor angetriebene Feder eingesteckt werden und wird beim Drehen der Feder auf und abbewegt.

Zweckmäßig ist es nach einer Weiterbildung der Erfindung auch, wenn die Zugstange ein Rohr ist, in dessen Endbereichen die Haltestäbe unter Wirkung der Kraft einer im Rohr befindlichen Druckfeder verschieblich gelagert sind. Hierdurch hat man eine Teleskop-Zugstange, die ein Entfernen oder Annähern des gehäusefernen Endes der Führungsschiene solange (vernünftige Grenzen) erlaubt, wie die Haltestäbe sich noch mit dem Rohr in Eingriff befinden und die Führung der Zugstange besorgen.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:

Figur 1     perspektivisch abgebrochen die Draufsicht auf die Rückenlehne der Hinterbank mit Hutablage und Rückfenster mit dort angeordneter Blendschutzeinrichtung in einem Personenfahrzeug,

Figur 2     eine ähnliche Ausführungsform wie Figur 1 mit Zugfeder bei angetriebener Wickelwelle in vergrößerter Darstellung,

Figur 3     abgebrochen und teilweise geschnitten eine Einzelheit aus Figur 2

Figur 4     eine Schnittansicht entlang der Linie IV - IV in Figur 3,

Figur 5     eine ähnliche Ansicht wie die Figur 3, jedoch bei einer anderen Ausführungsform mit Druckfeder in der Führungsschiene bei angetriebener Wickelwelle und

Figur 6     eine Schnittansicht entlang der Linie A-A der Figur 5.

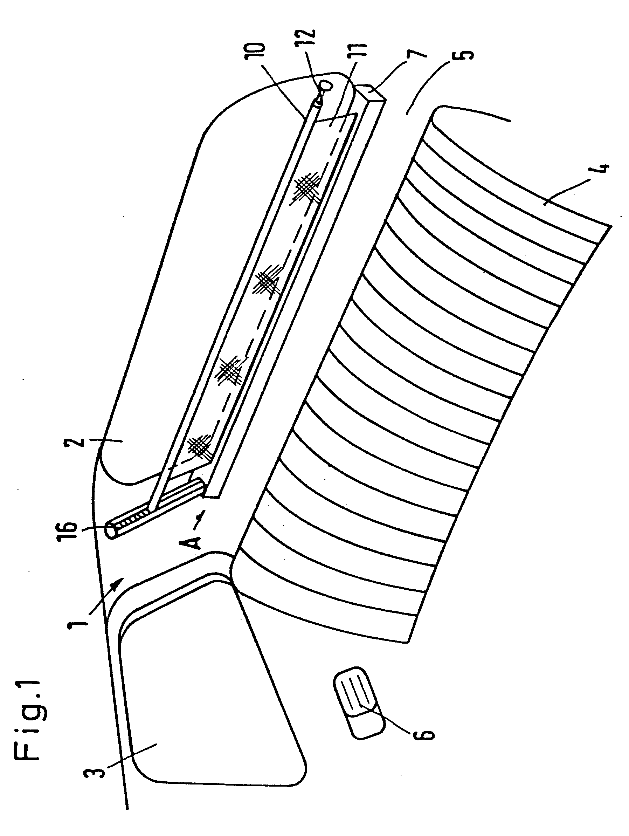

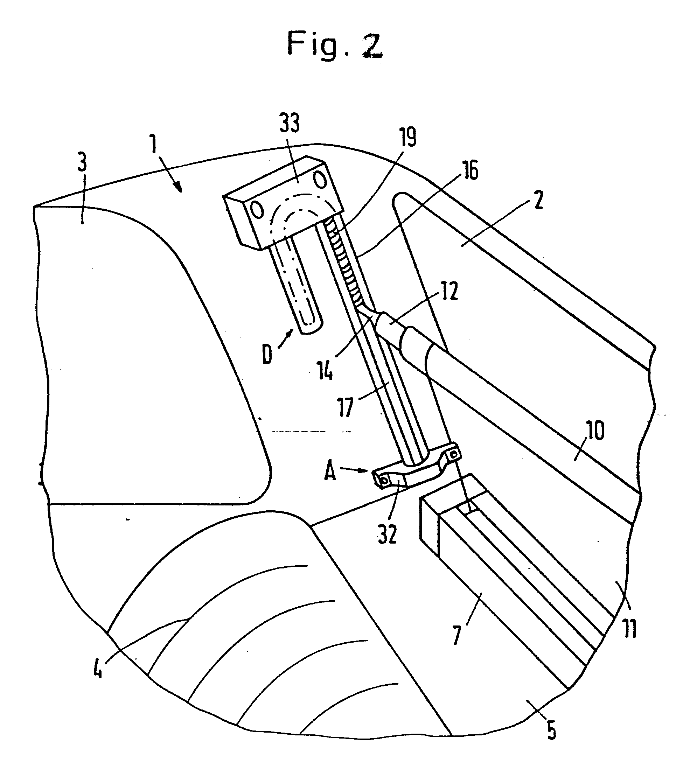

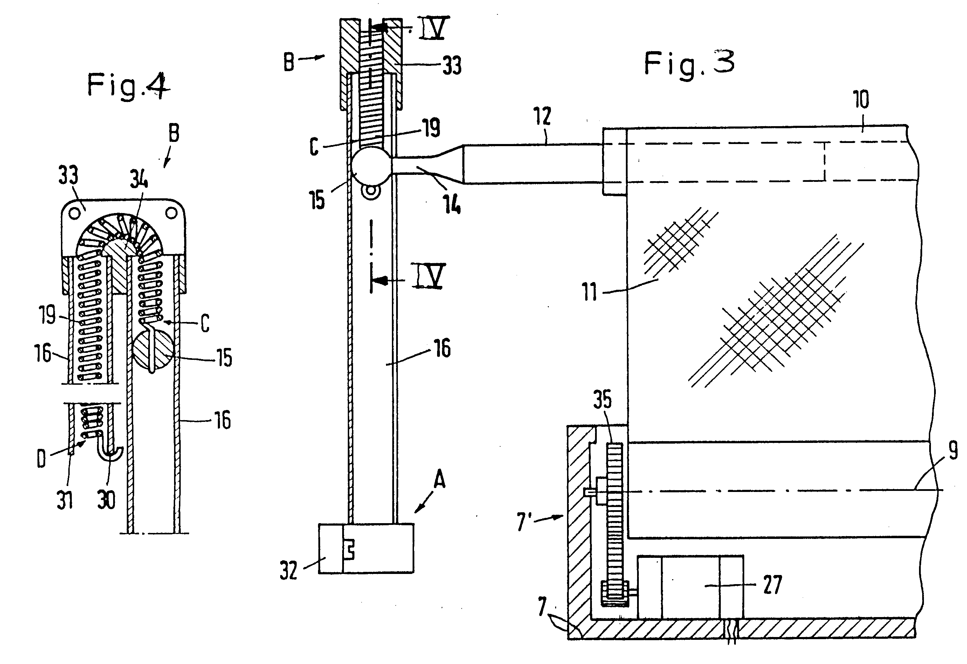

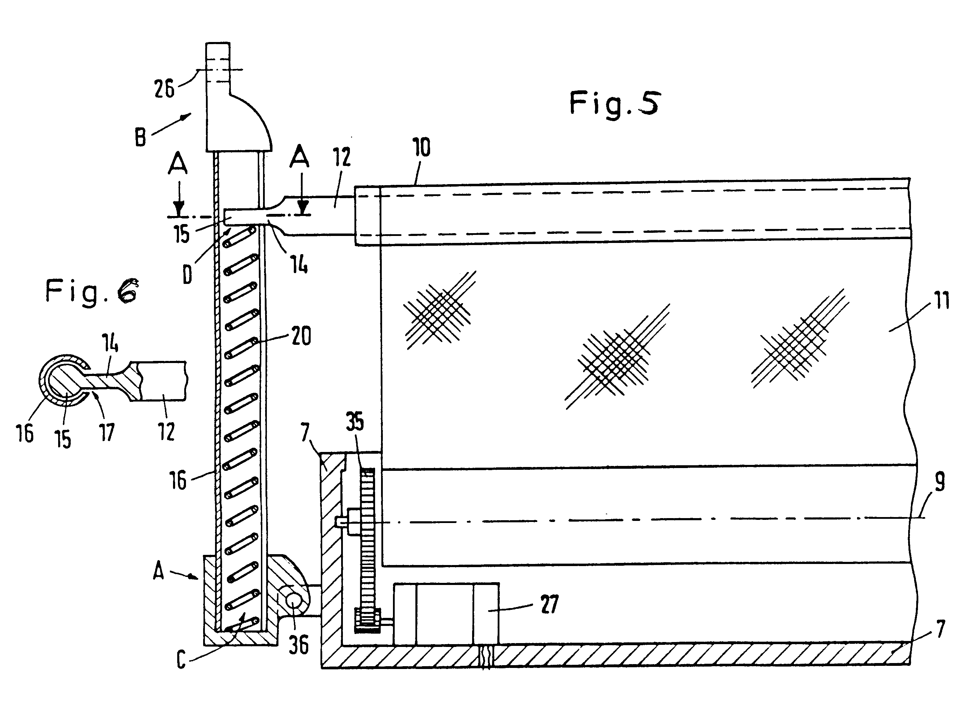

Von dem mit 1 bezeichneten Fahrzeugkörper ist in den Figuren 1 und 3 das Rückfenster 2, das rechte Seitenfenster 3, die Rückenlehne 4 der hinteren Sitzbank und die sogenannte Hutablage 5 (mit Aschenbecher 6) dargestellt. Auf dieser Hutablage 5 ist das Gehäuse 7 für die Wickelwelle 8 angebracht, deren Achse mit 9 bezeichnet ist und parallel zu der Zugstange 10 liegt. An der Zugstange 10 und auch der Wickelwelle 8 zur Wickel aufgewickelt befindet sich die Lichtschutzbahn 11, z.B. aus einem Kunststoffgewebe, die zwischen Wickelwelle 8 und Zugstange 10 aufgespannt ist. An den Enden der Zugstange 10 sind Haltestäbe 12 so beweglich gegen die Federwirkung einer Druckfeder 13 innerhalb der rohrförmig ausgestalteten Zugstange 10 angeordnet, daß sich praktisch bezüglich des Längenmaßes der Zugstange 10 eine Teleskopstange ergibt. In Längsrichtung des jeweiligen Haltestabes ist nach außen hin ein Verbindungshals 14 angebracht, welcher zu den äußeren Enden hin die Verbindung zu einem Führungskopf 15 vorsieht. Dieser ist bei der Ausführungsform nach den Figuren 1 bis 4 kugelförmig und nach der Ausführungsform der Figuren 5 und 6 eine runde Scheibe, deren Ebene senkrecht zur Längserstreckung der Führungsschiene 16 liegt. Diese ist im Querschnitt C-förmig, wie man unschwer aus Figur 6 erkennt. Bei der Ausführungsform nach den Figuren 1 bis 4 genügt es, wenn der längere Teil der Führungsschiene 16, der in den Figuren 2 und 4 den rechten Schenkel des Paares bildet und in Figur 3 vorn zu sehen ist, den sich dadurch ergebenden Längsschlitz 17 aufweist.

Im Inneren der Führungsschiene 16 ist ein längliches, biegefähiges Schraubenflächenelement bewegbar angeordnet, welches bei der Ausführungsform nach den Figuren 1 bis 4 eine Zugfeder 19 und bei der Ausführungsform nach den Figuren 5 und 6 eine Druckfeder 20 ist.

Am gehäusefernen Ende B der Führungsschiene 16 ist eine zweite Halterung vorgesehen, die über nicht gezeigte sondern nur schematisch durch die Mittellinie 26 angedeutete Befestigungsmittel am Fahrzeugkörper 1 angebracht ist (Fig. 7).

Bei der Ausführungsform der Figuren 1 bis 4 ist das längliche, biegefähige Schraubflächenelement als Zugfeder 19 ausgebildet, deren gehäusenahes Ende C an dem kugelförmigen Führungskopf 15 befestigt und deren gehäusefernes Ende D mittels des in Figur 4 gezeigten Hakens 30 über die Kante 31 des Führungsrohres 16 verhakt bzw. festgelegt ist. Man erkennt aus der Darstellung der Figuren 3 und 4, daß die Stirnseite 7' des Gehäuses 7 ohne Verbindung und frei von der Halterung 32 am gehäusenahen Ende A der Führungsschiene 16 ist. Am gehäusefernen Ende B weist die Führungsschiene 16 dieser Ausführungsform ein Umlenkteil 33 auf, welches einerseits die Befestigungseinrichtung für das gehäuseferne Teil B der Führungsschiene 16 und andererseits die Umlenkstelle bedeutet. Die Zugfeder 19 kann über eine halbkreisförmige Gleitfläche 34 bewegt werden.

Der Betrieb dieser Auführungsform nach den Figuren 1 bis 4 ergibt sich aus den Zeichnungen und erfolgt derart, daß beim Antrieb des Elektromotors 27 die Wickelwelle 8 mit Achse 9 über das Getriebe 35 beispielsweise in Aufwickelrichtung antreibt, so daß die Zugstange 10 entgegen der Rückhaltewirkung der Zugfeder 19 nach unten gezogen wird. Beim Umschalten des Motors 27 in Abwickelrichtung wird die Zugstange 10 dann von der Zugfeder 19 in umgekehrter Richtung nach oben gezogen, wobei immer der Führungskopf 15 in der im Querschnitt C-förmigen Führungsschiene 16 läuft.

Sehr ähnlich wie die letztgenannte Ausführungsform arbeitet auch die Blendschutzeinrichtung nach der zweiten Ausführungsform gemäß den Figuren 5 und 6, bei welcher die untere Halterung am gehäusenahen Ende A über die Drehachse 36 so drehbar ist, daß das gehäuseferne Ende B der Führungsschiene 16 sich unter Herausziehen des Haltestabes 12 aus der rohrförmigen Zugstange 10 nach links kippt. Wird durch Einschalten des Elektromotors 27 die Wickelwelle in Aufwickelrichtung gedreht, dann wird auch hier die Lichtschutzbahn 11 aufgewickelt und zieht hierbei die Zugstange 10 unter Zusammendrücken der Druckfeder 20 nach unten.

Die Führungsschiene 16 kann mit Vorteil innerhalb vernünftiger Grenzen zu jeder geeigneten Form gebogen werden, um sich am besten an die spezielle Anwendung anzupassen. Der Querschnitt des Profils der Führungsschiene 16 ist sehr klein, wodurch eine leichte Integration auch innerhalb eines Verkleidungsbleches eines Fahrzeuges möglich ist. Der Elektromotor 27 bewegt den vorhangartigen Lichtschutz 11 nach oben und unten. Das Gehäuse 7 für die Wickelwelle 8 ist recht kompakt.

Bei den Ausführungsformen nach den Figuren 1 bis 6 braucht keinerlei mechanische Verbindung zwischen dem Gehäuse 7 und der Führungsschiene 16 vorgesehen zu sein, so daß hierdurch ein Einbau in Fahrzeugen mit noch mehr Freiheitsgraden gewährleistet ist. Man erkennt, daß die gesamte Blendschutzeinrichtung einfach und preiswert herstellbar ist.

## Patentansprüche

1. Blendschutzeinrichtung in Fensternähe eines Fahrzeuges, mit einer um eine Wickelwelle (8,9) aufgewickelten, in einem länglichen Gehäuse (7) befindlichen Lichtschutzbahn (11), die sich vorzugsweise über die Breite des Fensters (2) erstreckt und an ihrem freien Ende mit einer seitlich geführten Zugstange (10) versehen ist, wobei an den Enden der Zugstange (10) in Richtung der Stangenachse bewegbare Haltestäbe (12) mit jeweils einem Verbindungshals (14) und an dessen Ende einem Führungskopf (15) angeordnet sind, die seitliche Führung der Zugstange (10) jeweils mittels einer im Querschnitt C-förmigen Schiene (16) mit Längsschlitz (17) erfolgt, und wobei die Schiene (16) neben dem Gehäuse (7) angeordnet und im Inneren mit einem länglichen, biegefähigen Schraubflächenelement (18-20) versehen ist, welches sich mit dem Führungskopf (15) in Eingriff befindet, der in der Schiene (16) gleitet und dessen Verbindungshals (14) durch den Längsschlitz (17) der Schiene (16) ragt, dadurch gekennzeichnet, daß die Schiene (16) leicht verformbar ist, daß die Wickelwelle (8) mit der Lichtschutzbahn (11) von einem Motor angetrieben ist, und daß das im Inneren der Führungsschiene (16) befindliche Schraubflächenelement eine Feder (19, 20) ist, durch welche die Zugstange (10) von der Wickelwelle (8) fort vorgespannt gehalten ist.

2. Blendschutzeinrichtung nach Anspruch 1, dadurch gekennzeichnet, daß das andere Ende (B) der Führungsschiene (16) mittels Befestigungseinrichtungen (26) am Fahrzeugkörper (1) angebracht ist.

3. Blendschutzeinrichtung nach Anspruch 1 oder 2, dadurch gekennzeichnet, daß die Feder eine Zugfeder (19) ist, deren eines Ende (D) an dem vom Gehäuse (7) entfernten Ende der Führungsschiene (16) befestigt ist (bei 31), während das gehäusenahe Federende (C) am Führungskopf (15) des Haltestabes (12) angebracht ist (Figuren 3 bis 5).

4. Blendschutzeinrichtung nach Anspruch 1 oder 2, dadurch gekennzeichnet, daß die Feder eine Druckfeder (20) ist, deren gehäusefernes Ende (D) gegen den Führungskopf (15) anliegt und deren gehäusenahes Ende (C) in einer drehbar (Achse 36) am Gehäuse (7) der Wickelwelle (8) angebrachten Halterung gehalten ist (Figuren 6 und 7).

5. Blendschutzeinrichtung nach einem der Ansprüche 1 bis 4, dadurch gekennzeichnet, daß der Führungskopf (15) kugelförmig ausgebildet ist (Figuren 1 bis 6).

6. Blendschutzeinrichtung nach einem der Ansprüche 1 bis 5, dadurch gekennzeichnet, daß die Zugstange (10) ein Rohr ist, in dessen Endbereichen die Haltestäbe (12) unter Wirkung der Kraft einer im Rohr befindlichen Druckfeder (13) verschieblich gelagert sind (Figuren 1 bis 7).

## Claims

1. Anti-dazzle device in the vicinity of the window of a vehicle, with a light protection web (11) located in an elongated casing (7), wound about a winding shaft (8, 9) and which preferably extends over the width of the window (2), being provided at its free end with a laterally guided tie rod (10) and on the ends of the tie rod (10) are provided retaining bars (12) movable in the direction of the rod axis with in each case one connecting neck (14) and at its end a guide head (15), lateral guidance of the tie rod (10) in each case taking place by means of a cross-sectionally C-shaped rail (16) with an elongated slot (17) and in which the rail (16) is positioned alongside the casing (7) and is provided in the interior with an elongated, bendable helical surface element (18 to 20), which is in engagement with the guide head (15), which slides in the rail (16) and whose connecting neck (14) projects through the longitudinal slot (17) of the rail (16), characterized in that the rail (16) can easily be deformed, that the winding shaft (8) with the light protection web (11) is driven by a motor and that the helical surface element located in the interior of the guide rail (16) is a spring (19, 20), which keeps the tie rod (10) pretensioned away from the winding shaft (8).

2. Anti-dazzle device according to claim 1, characterized in that the other end (B) of the guide rail (16) is fitted by means of fastening devices (26) to the vehicle body (1).

3. Anti-dazzle device according to claims 1 or 2, characterized in that the spring is a tension spring (19), whose one end (D) is fixed (at 31) to the end of the guide rail (16) remote from the casing (7), whilst the proximal spring end (C) is fitted to the guide head (15) of the retaining bar (12) (figs. 3 to 5).

4. Anti-dazzle device according to claims 1 or 2, characterized in that the spring is a compression spring (20), whose distal end (D) engages with the guide head (15) and whose proximal end (C) is held in a mounting support fitted in rotary manner (axis 36) to the casing (7) of the winding shaft (8) (figs. 6 and 7).

5. Anti-dazzle device according to one of the claims 1 to 4, characterized in that the guide head (15) is spherical (figs. 1 to 6).

6. Anti-dazzle device according to one of the claims 1 to 5, characterized in that the tie rod (10) is a tube, in whose end regions are displaceably mounted the retaining bars (12) under the action of the tension of a compression spring (13) located in the tube (figs. 1 to 7).

## Revendications

1. Dispositif antiéblouissant au voisinage de la fenêtre d'un véhicule, comportant une bande (11) de protection contre la lumière, enroulée autour d'un arbre d'enroulement (8, 9) et se trouvant dans un boîtier oblong (7), bande qui s'étend de préférence sur la largeur de la fenêtre (2) et, en son extrémité libre, est pourvue d'un tirant guidé latéralement, tandis qu'aux extrémité du tirant (10) sont disposées des barres de retenue (12), pouvant se déplacer dans la direction de l'axe du tirant et comportant chacune un col d'assemblage (14) et, en son extrémité, une tête de guidage (15), le guidage latéral du tirant (10) s'effectue dans chaque cas à l'aide d'un rail (16) ayant en section transversale la forme d'un C et comportant une fente longitudinale (17), le rail (16) étant disposé au voisinage du boîtier (7) et étant, dans son volume intérieur, pourvu d'un élément hélicoïdal souple et oblong (18, 20), lequel est en prise avec la tête de guidage (15), qui coulisse dans le rail (16) et dont le col d'assemblage (14) dépasse de la fente longitudinale (17) du rail (16), caractérisé en ce que le rail (16) est facilement déformable ; que l'arbre d'enroulement (8), avec la bande de protection contre la lumière (11), est entraîné par un moteur ; et que l'élément hélicoïdal se trouvant à l'intérieur du rail de guidage (16) est un ressort (19, 20) grâce auquel le tirant (10) est maintenu en pré-tension à partir de l'arbre d'enroulement (8).

2. Dispositif antiéblouissant selon la revendication 1, caractérisé en ce que l'autre extrémité (B) du rail de guidage (16) est rapportée à la carrosserie du véhicule (1) à l'aide de dispositifs de fixation (26).

3. Dispositif antiéblouissant selon la revendication 1 ou 2, caractérisé en ce que le ressort est un ressort de traction (19), dont une extrémité (D) est fixée contre l'extrémité du rail de guidage (16) éloignée du boîtier (7) (en 31), l'extrémité de ressort (C) proche du boîtier étant rapportée à la tête de guidage (15) de la barre de retenue (12) (Figures 3 à 5).

4. Dispositif antiéblouissant selon la revendication 1 ou 2, caractérisé en ce que le ressort est un ressort de compression (20), dont l'extrémité (D) éloignée du boîtier s'appuie contre la tête de guidage (15) et dont l'extrémité (C) voisine du boîtier est maintenue dans un support rapporté au boîtier (7) de l'arbre d'enroulement (8) de façon à pouvoir tourner autour de l'axe (36) (Figures 6 et 7).

5. Dispositif antiéblouissant selon l'une des revendications 1 à 4, caractérisé en ce que la tête de guidage (15) a une forme sphérique (Figures 1 à 6).

6. Dispositif antiéblouissant selon l'une des revendications 1 à 5, caractérisé en ce que le tirant (10) est un tube dans les zones terminales duquel les barres de retenue (12) sont logées de façon à pouvoir coulisser, sous l'effet de la force d'un ressort de compression (13) se trouvant dans le tube (Figures 1 à 7).

# Fig.1

EP 0 237 845 B1

# Fig. 2

Fig.4

Fig.3

33  34  B

19

16

C

15

D

31  30

16

16

B

33

19

C

15

IV

IV

14

16

A

32

12

10

11

9

35

7'

7

27

EP 0 237 845 B1

Fig.5

Fig.6